# EUROPEAN PATENT APPLICATION

(11) **EP 2 407 837 A2**
(43) Date of publication of application: **18.01.2012**
(21) Application number: 11173553.6
(22) Date of filing: 12.07.2011
(51) Int. Cl.: G05B 15/02, F24F 11/00, G05D 23/00

(54) **Thermal time constraints for demand response applications**

(30) Priority: 16.07.2010 US 837741
(71) Applicant: General Electric Company, Schenectady, NY 12345 (US)
(72) Inventor: Spicer, Lucas Bryant, Louisville, KY Kentucky 40225 (US); Besore, John K., Louisville, KY Kentucky 40225 (US); Worthington, Timothy Dale, Louisville, KY Kentucky 40225 (US)
(74) Representative: Illingworth-Law, William Illingworth

(57) **Abstract**

Apparatus and method (100) for managing energy of a home or other structure are disclosed. The thermal characteristics of a home are determined based on variables such as inside temperatures, outside temperatures, setpoint temperatures, and duty cycles over time. Response time constants of the home are calculated and used to generate at least one transfer function or table to predict and control energy efficiency versus comfort within the home. A user is presented with variations of cost and power consumptions to choose from and be factored into the transfer function.

## Description

### BACKGROUND

This disclosure relates to energy management, and more particularly to energy consumption systems and device control methods with time of use (TOU) and/or demand response (DR) energy programs. The disclosure fmds particular application to utility systems and appliances configured to manage energy loads to consumers through a communicating consumer control device, such as a programmable communicating thermostat (PCT). The disclosure has further application to any appliance that incorporates a heating/cooling cycle operable to create a sustaining environment or environmental comfort level, such as hot water heaters, refrigerators, wine chillers, etc.

Many utilities are currently experiencing a shortage of electric generating capacity due to increasing consumer demand for electricity. Currently utilities generally charge a flat rate, but with increasing cost of fuel prices and high energy usage at certain parts of the day, utilities have to buy more energy to supply customers during peak demand. If peak demand can be lowered, then a potential huge cost savings can be achieved and the peak load that the utility has to accommodate is lessened. In order to reduce high peak power demand, many utilities have instituted time of use (TOU) metering and rates which include higher rates for energy usage during on-peak times and lower rates for energy usage during off-peak times. As a result, consumers are provided with an incentive to use electricity at off-peak times rather than on-peak times and to reduce overall energy consumption of appliances at all times.

Presently, to take advantage of the lower cost of electricity during off-peak times, a user must manually operate power consuming devices during the off-peak times. However, a consumer may not always be present in the home to operate the devices during off-peak hours. In addition, the consumer may be required to manually track the current time to determine what hours are off-peak and on-peak.

Therefore, there is a need to provide a system that can automatically operate power consuming devices during off-peak hours in order to reduce consumer's electric bills and also to reduce the load on generating plants during on-peak hours. Active and real time communication of energy costs of appliances to the consumer will enable informed choices of operating the power consuming functions of the appliance.

Therefore, there is a need to provide an improved system that can enable control when power consuming devices are started after and/or before a DR event or TOU event, and thus, provide incentive for discretional power use to be moved into the off-peak timeframe so consumers can balance their level of comfort with a desired savings amount.

### SUMMARY

The present disclosure enables energy consumers to maintain comfort, reduce energy usage and costs by providing methods, systems and devices for appliances.

As utilities go to time of use (TOU) pricing and demand response (DR) control of residential energy loads, consumers will need methods, devices and appliances to help them maintain comfort, reduce energy usage and reduce their energy costs. In an exemplary embodiment, a method is disclosed that involves the recording thermal characteristics and time response constants of an individual home to help consumers plan "pre-chilling" or longer temperature setbacks along with other thermostat control behaviors that can be used with TOU or DR programs to reduce total energy, peak loads and reduce costs to residential energy consumers.

According to one aspect, an energy management system and method for one or more appliances comprises a controller for managing power consumption within a household or other structure. The controller is configured to receive and process a signal indicative of one or more energy parameters of an associated energy supplying utility, including at least a peak demand period or an off-peak demand period. The controller is configured to communicate, control and/or operate one or more appliances in one of a plurality of operating modes, including at least a normal operating mode and an energy savings mode in response to the received signal. The one or more appliances operate in the normal operating mode during the off-peak demand period and operate in the energy savings mode during the peak demand period. The controller is configured to control the transition of the one or more appliances to the normal operating mode and energy savings mode before the peak demand period begins and after the peak demand period is over based on the thermal characteristics of the individual home.

In another aspect, a programmable communicating thermostat (PCT), home energy manager (HEM) system or central controller includes a cost savings /comfort sliding scale or user preference choice in a user interface/display, which is factored in with the load usage and thermal characteristics of the particular structure (e.g., home or business) to determine pre-chilling or pre-warming length of DR events, setpoint during peak hours pricing so that the users chosen levels of comfort and cost savings are met, and accurate information about cost savings (or cost increases for ignoring suggestions are presented).

### BRIEF DESCRIPTION OF THE DRAWINGS

FIG. 1 is a schematic illustration of an energy management system with one or more appliances in accordance with one aspect of the present disclosure;
FIG. 2 is a graph illustrating at least one of numerous potential exemplary house characteristics in accordance with another aspect of the present disclosure; and
FIG. 3 is a flow diagram illustrating an example methodology for managing energy of a structure.

### DETAILED DESCRIPTION

Time of use (TOU) pricing and demand response (DR) systems control energy load at the home user level. For example, air conditioning (AC) load can be controlled with a Programmable Communicating Thermostat (PCT). DR systems balance user comfort with total energy costs and peak loading of the grid. When prices are high during peak demand times, DR systems work to shed load to not overload the utility and keep cost lower for consumers that desire savings.

Different systems and methods of controlling load have been investigated. In one aspect of the disclosure, variations of cost and power consumption are controlled by pre-chilling or pre-warming the structure for a pre-determined time based on dynamic tables that indicate an individual home profile. Consequently, pre-chilling or pre-warming of the home is performed before a DR event or TOU event.

More particularly, the thermal characteristics of a particular home are mapped out so that response times (e.g., time response constants) for those characteristics can be determined. A transfer function or lookup table can then be generated, which accurately predicts the amount of pre-chilling or pre-warming to perform on the house for lower energy cost or for greater efficiency in maintaining an energy level through DR/TOU events based on the individual home profile based on the home's characteristics and response times.

For example, if a PCT or controller gathers data of a particular home that indicates when the outside temperature is 90 degrees F, and the setpoint temperature for the home is 74 degrees F, the air conditioning may turn on at 78 degrees and take two hours to bring the home back down to 74. This information is used to build a home profile for these particular conditions by populating a dynamic table. Because each home has different variables affecting temperature differences, temperature changes, and/or response times, each home behaves differently to various heating and cooling conditions. For example, different constructions, family sizes, behaviors, etc change the home's response times to heating and cooling. Based on information about the specific individual home, a pre-chilling occurs to lower the time in which the air conditioner turns on during a peak pricing situation, i.e., for commanding the air conditioner to turn on at a later or lower priced time. Alternatively, cost savings information is presented to the user for changing the setpoint temperature along with an increased/decreased efficiency schedule based on the characteristics of the particular home.

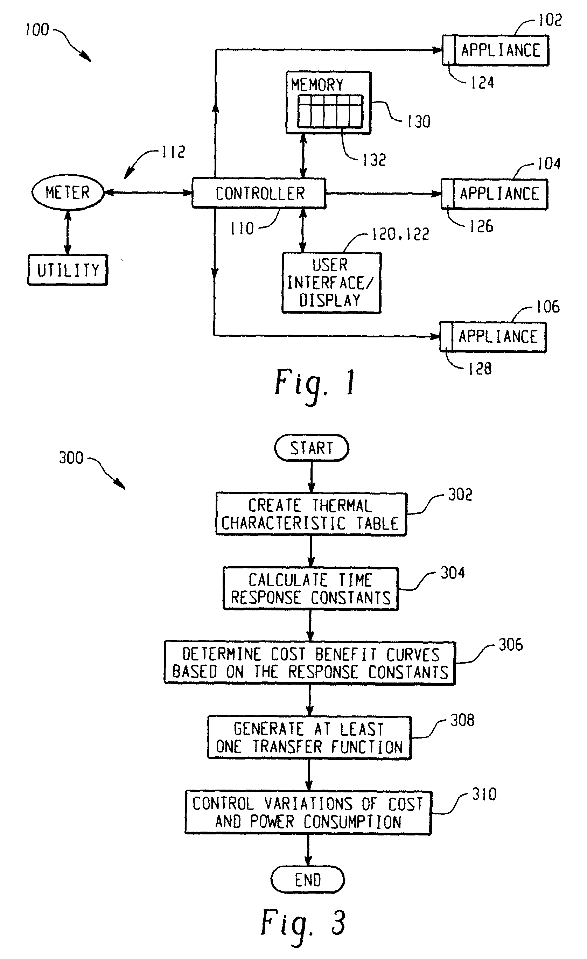

FIG. 1 schematically illustrates an exemplary energy management system 100 for one or more appliances 102, 104, 106 according to one aspect of the present disclosure. Each of the appliances 102, 104, 106 can comprise one or more power consuming features/functions. For example, appliance 104 can be a refrigerator and/or an HVAC system including a refrigeration system. The energy management system 100 generally comprises a controller 110 for managing power consumption within a household. The controller 110 is operatively connected to each of the power consuming features/functions. The controller 110 can include a micro computer on a printed circuit board, which is programmed to selectively send signals to an appliance control board 124, 126, 128 of appliance 102, 104, and/or 106 respectively in response to the input signal it receives. The appliance control board, in turn, is operable to manipulate energization of the power consuming features/functions thereof.

The controller 110 is configured to receive a signal 112 by a receiver and process the signal indicative of one or more energy parameters and/or a utility state of an associated energy supplying utility, for example, including availability and/or current cost of supplied energy. There are several ways to accomplish this communication, including but not limited to PLC (power line carrier, also known as power line communication), FM, AM SSB, WiFi, ZigBee, Radio Broadcast Data System, 802.11, 802.15.4, etc. The energy signal may be generated by a utility provider, such as a power company, and can be transmitted via a power line, as a radio frequency signal, or by any other means for transmitting a signal when the utility provider desires to reduce demand for its resources. The cost can be indicative of the state of the demand for the utility's energy, for example a relatively high price or cost of supplied energy is typically associated with a peak demand state/period and a relative low price or cost is typically associated with an off-peak demand state/period.

The controller 110 is configured to communicate information to the appliances which result in the operation of the appliances 102, 104, 106 in one of a plurality of operating modes, including at least a normal operating mode and an energy savings mode in response to the received signal. Specifically, each appliance 102, 104, 106 can be operated in the normal operating mode during the off-peak demand state or period and can be operated in the energy savings mode during the peak demand state or period. As will be discussed in greater detail below, the controller 110 is configured to communicate with each appliance to precipitate the return of the appliances to the normal operating mode after the peak demand period is over. Alternatively, the control board of each appliance could be configured to receive communication directly from the utility, process this input, and in turn, invoke the energy savings modes, without the use of the centralized controller 110.

If the controller 110 receives and processes an energy signal indicative of a peak demand state or period at any time during operation of the appliances 102, 104, 106, the appliance control board makes a determination of whether one or more of the power consuming features/functions of each appliance should be operated in the energy savings mode and if so, it signals the appropriate features/functions of each appliance to begin operating in the energy savings mode in order to reduce the instantaneous amount of energy being consumed by the appliances. The controller 110 is configured to communicate with the appliance control board 124 thru 128 to provide command instructions for the appliance control board to govern specific features/functions to operate at a lower consumption level and determine what that lower consumption level should be. This enables each appliance to be controlled by the appliance's controller where user inputs are being considered directly, rather than invoking an uncontrolled immediate termination of the operation of specific features/functions of an appliance from an external source, such as a utility. It should be appreciated that the controller 110 can be configured with default settings that govern normal mode and energy savings mode operation. It should also be appreciated that the controller could be imbedded within the circuitry of the appliance control board. Such settings in each mode can be fixed, while others are adjustable to user preferences to provide response to load shedding signals.

The controller 110 includes a user interface 120 having a display 122 and control buttons for making various operational selections. The display can be configured to provide active, real-time feedback to the user on the cost of operating each appliance 102, 104, 106. The costs are generally based on the current operating and usage patterns and energy consumption costs, such as the cost per kilowatt hour charged by the corresponding utility. The controller 110 is configured to gather information and data related to current usage patterns and as well as current power costs. This information can be used to determine current energy usage and cost associated with using each appliance in one of the energy savings mode and normal mode. This real-time information (i.e., current usage patterns, current power cost and current energy usage/cost) can be presented to the user via the display.

The controller 110 further comprises a memory 130 having at least one thermal characteristic table 132 for a home or other structure (e.g., warehouse, business, etc.). The table comprises variables associate with the heating and cooling conditions of the home, for example. These variables include time, inside temperatures, outside temperatures, setpoint temperatures, and/or duty cycles each corresponding to the operating modes of the HVAC unit, such as heating, cooling fan only, off. A table is generated for any given operating mode is initially filled with average home data and then modified with recalculated averages whenever that operating mode was selected. The tabled data is then used to calculate the elapsed time for the home to heat up to a specific temperature with the system off during the cooling season, how long the home takes to cool to a specific temperature during the cooling season, how long the home takes to heat to a specific temperature during the heating season and how long the home takes to cool to a specific temperature during the heating season in relation to any given inside and outside temperature.

In one embodiment, a rolling average of the thermal characteristics, such as inside and outside temps with other information is kept that updates at given times of day or periods of the HVAC cycle. By using these averages of the home's thermal characteristics, the responses of the home are stabilized to local and acute variations in the thermal characteristics. Gradual and/or immediate changes in the home are also inherently incorporated, such as insulation deterioration, changes in external shading, or local instantaneous weather changes, which are factored into the time response calculations. Furthermore, the memory can also be configured to store multiple tables or a family of tables to incorporate other variables affecting the times for the temperatures to change. For example, one table can be stored for cloudy days and a separate table kept for sunny days, provided that the controller is presented this data from some outside source, for example, a broadband connection to an outside weather service. It will be obvious to one skilled in heat transfer that the heating or cooling rates of the house will be impacted by these and other outside variables that can be accounted for in these families of data.

The duration of time that each appliance 102, 104, 106 operates in the energy savings mode may be determined by information in the energy signal. For example, the energy signal may inform the controller 110 (e.g., PCT, HEM, etc.) to operate in the energy savings mode for a few minutes or for one hour before a DR event, at which time each appliance 102, 104, 106 returns to normal operation. Alternatively, the energy signal may be continuously transmitted by the utility provider, or other signal generating system. Once transmission of the signal has ceased, each appliance returns to normal operating mode. In yet another embodiment, an energy signal may be transmitted to the controller 110 to signal each appliance 102, 104, 106 to operate in the energy savings mode. A normal operation signal may then be later transmitted to the controller to signal each appliance 102, 104, 106 to return to the normal operating mode.

The operation of each appliance 102, 104, 106 may vary as a function of a characteristic of the utility state and/or supplied energy, e.g., availability and/or price, as well as the thermal characteristics stored in the table 132. Because some energy suppliers offer time-of-day pricing in their tariffs, price points could be tied directly to the tariff structure for the energy supplier. If real time pricing is offered by the energy supplier serving the site, this variance could be utilized to generate savings and reduce chain demand in conjunction with a transfer function generated according to the thermal time response constants stored in memory 130.

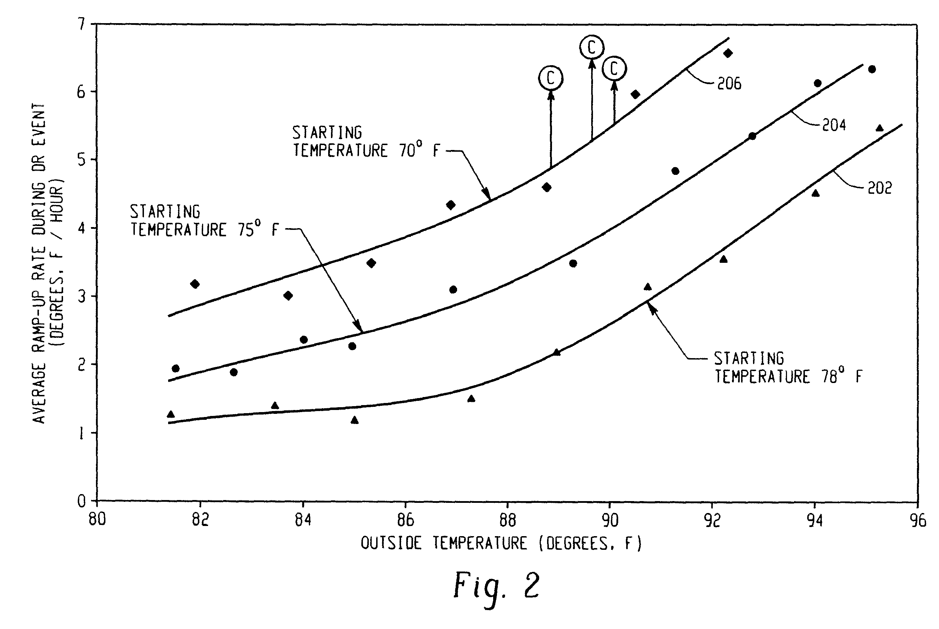

With reference to FIG. 2, the house characteristics for a home are graphed to provide response constants, such as ramp-up rates for increases in temperature during a DR event. The vertical axis and horizontal axis correspond respectively to a ramp-up rate in degrees per hour and outside temperature in degree F. Each curve 202, 204, 206 represents the response of the home during a DR event, for example. Initially data points for the home are stored in the thermal characteristic table 132 and mapped to generate response constants, such as ramp-up rates or ramp-down rates. Data points are mapped and plotted for future DR events to compare with. It will be obvious to one skilled in the art that the controller can also be provided with the capability to "curvefit" via regression analyses the data points to devise an equation or family of equations to be used to extract data with a given set of input variables.

For example, in order to provide information to a user for ways to save money various power consumption data is charted for various setpoint temperatures, temperatures outside, and inside as well as duty cycles of the HVAC unit over time. Each curve is associated with a certain starting temperature in which the home is at when the home begins heating. For example, curve 206 illustrates an average ramp-up rate during a DR event when the home starts at 70 degrees F, curve 204 at a starting temperature of 75 degrees F, and curve 202 at 78 degrees F. As the outdoor temperature increases, so does the average ramp-up rate to maintain the home at the setpoint temperature. For example, the thermal characteristic table records that outside temperature is 90 degrees F and 75 degrees inside. If the setpoint temperature is shifted to 78 degrees F, the air conditioner will go off, and the table will indicate how long it takes the house to go up to 78 degrees F each hour. The curves are generated to show the profile of thermal responses, such as heating up times of the house. In future events when the outside temperature may be 95 degrees F, for example, and the setting is at 75 degrees F at 2 o' clock a.m., the controller can send an instruction to indicate a setpoint of 78 degrees to increase at a more controlled rate. Another example, may be that it is also raining outside, and based on historical tables created for the home temperature changes took longer to occur since the setting was not changed from 75 to 78 during those times. The time it took for the change to occur is the slope of the curve in FIG. Consequently, the controller builds home characteristic tables with different parameters affecting the conditions of the thermal responses of the home, such as an amount of sunshine, number of children home or not home, an amount of shading, etc., in order to predict the thermal response of the home. This can be done for cooling down rates and heating up rates of the individual home. This system assumes that the controller has access to the variables, such as sunny, cloudy, shaded, etc. If there is not access to these variables, the system can default to the overall running average data that encompasses all of the variables rolled into one data set.

Thermal time response constants of the home are calculated corresponding to each table. The constants are calculated based on the variables of each table with respect to different time durations for the structure to cool and also to heat during a heat season and a cooling season. The thermal time constants of the home can be learned passively as the HVAC goes through the different operating modes, or the user can select a more active approach that would involve the system, when running in the cooling mode, for example, to simulate DR events and HVAC shutoff to capture passive temperature rise/fall data of the home. The advantage of the active approach is that the data would be collected in less time than if the system was only learning passively during normal operation.

The thermal time response constants include an exponential decay time that indicates what the home looks like under various circumstances affecting the home's temperature. The captures the essence or profile of the individual house under various conditions for heating up and for cooling down. For example, as the AC powers on at 78 degrees F and it is 95 degrees outside, then the time to return to return to the lower temperature may be two hours, which is indicated by the slope of the curve. The next day when the same occurrence happens, the system knows how the house will respond to the same thermal characteristics.

The response times can also be determined in conjunction with the duty cycle of an HVAC system. The controller can look at the HVAC and determine how it runs on a normal basis, not a DR event, and store that in the hottest time of the day it runs for thirty minutes and is off for thirty minutes, and that at night, different duty cycles are generated. This cycling info is used for different operating modes of the HVAC to determine energy savings. For example, the HEM will tell a consumer how much money you're going to save by shifting the set point from 74 to 78 based on historical response times built upon knowledge of how much savings would be generated if the air conditioner had stayed at 74 versus how long it off from 74 to 78. The difference between the two conditions can be found by subtractions, for example, and then multiplied by the cost per kilowatt-hour of the price tier. This is how much money the consumer would save, for example.

FIG. 3 illustrates an exemplary method 300 for managing energy of a structure (e.g., a residential home, or a business). While the method 300 is illustrated and described below as a series of acts or events, it will be appreciated that the illustrated ordering of such acts or events are not to be interpreted in a limiting sense. For example, some acts may occur in different orders and/or concurrently with other acts or events apart from those illustrated and/or described herein. In addition, not all illustrated acts may be required to implement one or more aspects or embodiments of the description herein. Further, one or more of the acts depicted herein may be carried out in one or more separate acts and/or phases.

The method 300 begins at start. At 302 thermal characteristic tables are created to relate variables such as inside temperatures, outside temperatures, setpoint temperatures, and/or duty cycles of an appliance. The outside temperatures are found by requesting info from the controller 110 of FIG. 1 or some other device having access to outside temperatures (e.g., HEM, a wireless probe, broadband connection to weather data for the zip code at hand, etc.).

For example, controller could be a PCT that creates the thermal characteristic tables 130 for a home. The inside temperatures, outside temperatures, setpoint temperatures, and/or duty cycles each correspond to the operating modes of an HVAC unit, such as heating, cooling fan only, off. The table for any given operating mode is initially filled with average home data and then would be added to and modified with recalculated averages whenever that operating mode was selected. As discussed above, the tabled data calculates how long the home takes to heat up with the system off or on during various seasons in relation to any given inside and outside temperatures.

In one embodiment, a rolling average of inside and outside temps with other information can be kept that updates at given times of day or periods of the HVAC cycle so that the response of the home can be stabilized to local and acute variations in thermal characteristics while considering gradual changes in the home, such as insulation deterioration, changes in external shading, or local instantaneous weather changes.

At 304 thermal time response constants are calculated corresponding to each table. The constants are calculated based on the variables of each table with respect to different time durations for the structure to cool and also to heat during a heat season and a cooling season. The thermal time constants of the home can be learned passively as the HVAC goes through the different operating modes, or the user can select a more active approach that would involve the system, when running in the cooling mode, for example, to simulate DR events and HVAC shutoff to capture passive temperature rise/fall data of the home. The advantage of the active approach is that the data would be collected in less time than if the system was only learning passively during normal operation.

At 306 cost benefit curves based on the time response constants are determined. For example, determining the thermal characteristics of the home is combined with a duty cycle (run time) function and a sub-metering technique to form a power profiling process for the HVAC system. The sub-metering can be performed by current transducers (CTs), by sending command instructions to instruct an appliance controller (e.g., the control board 124-128) having user controls to shut-off/turn-on the HVAC in response to the instructions received, or another method to get real time HVAC load information from a power meter. Likewise, the user could input the tonnage, brand, model, current rating, or similar information to allow lookup data or calculations of the estimated power consumption. For example, the HVAC load information can be obtained by determining a power difference based on power levels recorded when the HVAC unit is on and off. With accurate knowledge of the HVAC runtime and actual power usage in any given temperature profile the consumer is provided information about how the home will respond, and how to maximize reduced cost along with comfort in the home, for example. The user inputs the desired comfort level versus cost as a temperature scheme to be factored into a transfer function for predicting heat-up or cool-down times for each operating mode of the HVAC unit.

At 308 at least one transfer function is generated. The transfer function is used to predict heat-up or cool-down times for each operating mode based on the time response constants calculated at 304 and the temperature scheme inputted by the user to control variations of cost and power consumption. For example, a regression calculation is performed on the table of variables (internal temperatures, external temperatures, setpoint temperatures, and/or duty cycles) to produce a transfer function that will predict the heat-up or cool-down time of the system for any given operating mode and temperature profile. Other parameters that impact these relationships are also inherently incorporated into the transfer function, for example, sunlight versus cloudy, time of day, shaded or non-shaded versus time, changes in insulation, changes in the efficiency of the windows or doors, changes in external shading, wind temperature, weather patterns, local variability in short term temperature changes and/or any factor that may affect the thermal characteristics of a home, for example.

At 310 variations of cost and power consumption are controlled by pre-chilling or pre-warming the structure for a pre-determined time. Pre-chilling or pre-warming is performed during a time before a DR event or TOU event. Because the thermal characteristics of a home have been mapped out and response times (e.g., time response constants) for those characteristics have been determined, the transfer function generated can accurately predict the amount of pre-chilling or pre-warming to perform on the house for lower energy cost or for greater efficiency in maintaining an energy level through DR/TOU events.

For example, if a PCT or controller 110 has gathered data of a home that indicates when the outside temperature is 90 degrees F, and the setpoint is about 74, the air conditioning may turn on at 78 degrees and take two hours to bring the home back down to 74. Based on this information, a pre-chilling can occur to lower the time in which the air condition turns on and for the air condition to turn on at a later time. Alternatively, cost savings information is presented to the user for changing the setpoint temperature along with an increased/decreased efficiency schedule based on the characteristics of the particular home.

The invention has been described with reference to the preferred embodiments. Obviously, modifications and alterations will occur to others upon reading and understanding the preceding detailed description. It is intended that the invention be construed as including all such modifications and alterations.

Various aspects and embodiments of the present invention are defined by the following numbered clauses:
1. A method for managing energy of a structure executed via a controller with at least one memory storing executable instructions comprising the method, comprising:
   creating thermal characteristic tables with variables comprising time, inside temperatures, outside temperatures, setpoint temperatures and duty cycles, and corresponding to each operating mode of an HVAC unit of the structure, comprising heating modes, cooling modes, fan modes, and an off mode;
   calculating time response constants corresponding to each table based on the variables created and with respect to different time durations for the structure to cool and to heat during a heat season and a cooling season; and
   determining cost benefit curves based on the time response constants for communicating various temperature schemes to a user.
2. The method of clause 1, further comprising:
   generating at least one transfer function to predict heat-up or cool-down times for each operating mode based on the time response constants and a temperature scheme inputted by the user to control variations of cost and power consumption for the structure; and
   controlling variations of cost and power consumption comprising pre-chilling or pre-warming the structure for a predetermined time.
3. The method of clause 1 or clause 2, wherein the time durations comprise different time intervals of temperature changes within the structure affected by the variables, wherein the variables further comprise changes in insulation of the structure, changes in the efficiency of the windows or doors of the structure, changes in external shading covering the structure, and/or local variability in short term temperature changes.
4. The method of any preceding clause, wherein pre-chilling or pre-warming the structure occurs during a time duration before a demand response event or a time of use event while concurrently controlling variations of cost and power consumption with respect to a change in the variables to maintain a desired comfort level within the structure.
5. The method of any preceding clause, further comprising: updating at least one thermal characteristic table by storing re-calculated averages for at least one variable of data obtained, wherein the updating occurs at a pre-determined time of day.
6. The method of any preceding clause, further comprising: obtaining user preferences for a temperature scheme chosen by the user and generating at least one transfer function to predict heat-up or cool-down times of each operating mode based on the time response constants, the temperature scheme, and the user preferences to control variations of the variables for the structure.
7. The method of any preceding clause, further comprising: factoring into the transfer function parameters that impact the thermal characteristics of the structure comprising an amount of sunlight, a time of day, a rate of insulation decay, wind temperature, weather patterns, and/or an amount of shade with respect to time.
8. The method of any preceding clause, further comprising: communicating a choice of temperature schemes to the user with the cost benefit curves and time response constants on a user display.
9. The method of any preceding clause, comprising re-calculating the time constants as the controller operates in different operating modes, or re-calculating the time constants by actively simulating a demand response event or time of use event as the controller operates in the operating mode.
10. The method of any preceding clause, comprising:
   storing variables of data comprising a duty cycle of the HVAC unit and forming a power profiling process comprising:
      commanding an energy consuming device within a home area network to turn on;
      recording a first power level of a power meter in a power consumption table;
      commanding the appliance to turn off;
      recording a second power level of the power meter;
      determining a power difference based on the first and second power level recorded to be factored into the transfer function; and
      factoring the power difference into the transfer function.
11. A method for managing energy of a structure executed via a controller with at least one memory storing executable instructions comprising the method, comprising:
   creating thermal characteristic tables with variables comprising time, inside temperatures, outside temperatures, setpoint temperatures and duty cycles, and corresponding to each operating mode of an energy consuming device of the structure;
   calculating time response constants corresponding to each table based on the variables created and with respect to time durations for the structure to cool and to heat during a heat season and a cooling season;
   generating at least one transfer function to predict heat-up or cool-down times of each operating mode based on the time response constants, and temperature scheme inputted by the user to control variations of the variables for the structure; and
   controlling variations of the variables comprising pre-chilling the structure or pre-warming the structure for a predetermined time.
12. The method of clause 11, further comprising determining cost benefit curves based on the time response constants for communicating various temperature schemes to a user, wherein the energy consuming device comprises an HVAC system comprising heating modes, cooling modes, fan modes, and an off mode.
13. The method of clause 11 or clause 12, wherein the time durations comprise various time intervals of temperature changes within the structure affected by the variables, wherein the variables further comprise changes in insulation of the structure, changes in external shading covering the structure, and/or local instantaneous weather changes.
14. The method of any of clauses 11 to 13, wherein pre-chilling or pre-warming the structure occurs before a demand response event or a time of use event to maintain a desired comfort level within the structure.
15. The method of any of clauses 11 to 14, further comprising:
   factoring into the transfer function impacting parameters comprising an amount of sunlight, a time of day, a rate of insulation decay, wind temperature, weather patterns, and/or an amount of shade with respect to time.
16. An energy management system for automatically learning thermal characteristics of an enclosure and presenting cost benefit options to a user, comprising:
   a controller coupled to at least one energy consuming device comprising heating components, cooling components, and fan components, and operative to monitor and control energy consumption of the energy consuming device; and
   a user display coupled to the controller to communicate various temperature schemes for cost savings and comfort to the user;
   wherein the controller comprises a processor, a memory and a thermal component configured to create thermal characteristic tables in the memory comprising variables of inside temperatures, outside temperatures, setpoint temperatures and duty cycles for each component of the energy consuming device;
   wherein the controller comprises a timing component coupled to the thermal component configured to calculate time response constants based on the variables of each thermal characteristic table and to calculate a transfer function according to a chosen temperature scheme for stabilizing variations of the variables.
17. The system of clause 16, further comprising: a transceiver coupled to the controller configured to send a communication to the energy consuming device that powers the appliance on or off via the communication sent and to obtain information from a power/energy measuring device and the energy consuming device.
18. The system of clause 16 or clause 17, wherein the energy consuming device comprises an HVAC system and the controller comprises a home energy manger and/or a programmable communicating thermostat.
19. The method of any preceding clause, wherein the controller is configured to receive user settings or other input information and factor them into the transfer function, and is configured to provide information to the user display device comprising cost reduction techniques and suggestions for energy savings.

## Claims

1. A method for managing energy of a structure (300) executed via a controller (110) with at least one memory (130) storing executable instructions comprising the method, comprising:
creating thermal characteristic tables (132) with variables comprising time, inside temperatures, outside temperatures, setpoint temperatures and duty cycles, and corresponding to each operating mode of an HVAC unit of the structure, comprising heating modes, cooling modes, fan modes, and an off mode;
calculating time response constants (304) corresponding to each table based on the variables created and with respect to different time durations for the structure to cool and to heat during a heat season and a cooling season; and
determining cost benefit curves (202, 306) based on the time response constants for communicating various temperature schemes to a user.

2. The method of claim 1, further comprising:
generating at least one transfer function to predict heat-up or cool-down times for each operating mode based on the time response constants and a temperature scheme inputted by the user to control variations of cost and power consumption (310) for the structure; and
controlling variations of cost and power consumption (310) comprising pre-chilling or pre-warming the structure for a predetermined time.

3. The method of claim 1 or claim 2, wherein the time durations comprise different time intervals of temperature changes within the structure affected by the variables, wherein the variables further comprise changes in insulation of the structure, changes in the efficiency of the windows or doors of the structure, changes in external shading covering the structure, and/or local variability in short term temperature changes.

4. The method of any preceding claim, wherein pre-chilling or pre-warming the structure occurs during a time duration before a demand response event or a time of use event while concurrently controlling variations of cost and power consumption (310) with respect to a change in the variables to maintain a desired comfort level within the structure.

5. The method of any preceding claim, further comprising: updating at least one thermal characteristic table (132) by storing re-calculated averages for at least one variable of data obtained, wherein the updating occurs at a pre-determined time of day.

6. The method of any preceding claim, further comprising: obtaining user preferences for a temperature scheme chosen by the user and generating at least one transfer function to predict heat-up or cool-down times of each operating mode based on the time response constants, the temperature scheme, and the user preferences to control variations of the variables for the structure.

7. The method of any preceding claim, further comprising: factoring into the transfer function parameters that impact the thermal characteristics of the structure comprising an amount of sunlight, a time of day, a rate of insulation decay, wind temperature, weather patterns, and/or an amount of shade with respect to time.

8. The method of any preceding claim, further comprising: communicating a choice of temperature schemes to the user with the cost benefit curves (202, 306) and time response constants on a user display.

9. The method of any preceding claim, comprising re-calculating the time constants as the controller (110) operates in different operating modes, or re-calculating the time constants by actively simulating a demand response event or time of use event as the controller (110) operates in the operating mode.

10. The method of any preceding claim, comprising:
storing variables of data comprising a duty cycle of the HVAC unit and forming a power profiling process comprising:
commanding an energy consuming device within a home area network to turn on;
recording a first power level of a power meter in a power consumption table;
commanding the appliance (102, 104, 106) to turn off;
recording a second power level of the power meter;
determining a power difference based on the first and second power level recorded to be factored into the transfer function; and
factoring the power difference into the transfer function.

11. The method of any preceding claim, wherein the controller (110) is configured to receive user settings or other input information and factor them into the transfer function, and is configured to provide information to the user display device comprising cost reduction techniques and suggestions for energy savings.

12. An energy management system (100) for automatically learning thermal characteristics of an enclosure and presenting cost benefit options to a user, comprising:
a controller (110) coupled to at least one energy consuming device comprising heating components, cooling components, and fan components, and operative to monitor and control energy consumption of the energy consuming device; and
a user display coupled to the controller (110) to communicate various temperature schemes for cost savings and comfort to the user;
wherein the controller (110) comprises a processor, a memory (130) and a thermal component configured to create thermal characteristic tables (132, 302) in the memory (130) comprising variables of inside temperatures, outside temperatures, setpoint temperatures and duty cycles for each component of the energy consuming device;
wherein the controller (110) comprises a timing component coupled to the thermal component configured to calculate time response constants (304) based on the variables of each thermal characteristic table (132) and to calculate a transfer function according to a chosen temperature scheme for stabilizing variations of the variables.

13. The system of claim 12, further comprising: a transceiver coupled to the controller (110) configured to send a communication to the energy consuming device that powers the appliance (102, 104, 106) on or off via the communication sent and to obtain information from a power/energy measuring device and the energy consuming device.

14. The system of claim 12 or claim 13, wherein the energy consuming device comprises an HVAC system and the controller (110) comprises a home energy manager and/or a programmable communicating thermostat.
